# EUROPÄISCHE PATENTSCHRIFT

(11) **EP 1 311 605 B1**
(45) Veröffentlichungstag und Bekanntmachung des Hinweises auf die Patenterteilung: **06.04.2005**
(21) Anmeldenummer: 01960613.6
(22) Anmeldetag: 02.08.2001
(51) Int. Cl.: C08K 9/04

(54) **VERWENDUNG VON AMPHIPHILEN POLYMEREN ODER COPOLYMEREN ZUR OBERFLÄCHENMODIFIKATION VON REAKTIVEN ANORGANISCHEN FÜLLSTOFFEN**
USE OF AMPHIPHILIC POLYMERS OR COPOLYMERS FOR SURFACE MODIFICATION OF REACTIVE INORGANIC FILLERS
UTILISATION DE POLYMERES AMPHIPHILES OU DE COPOLYMERES AMPHIPHILES POUR MODIFIER LA SURFACE DE MATIERES DE CHARGE INORGANIQUES REACTIVES

(30) Priorität: 04.08.2000 DE 10038147; 22.12.2000 DE 10064240
(43) Veröffentlichungstag der Anmeldung: 21.05.2003
(73) Patentinhaber: SÜD-CHEMIE AG, 80333 München (DE)
(72) Erfinder: KRÄMER, Inge, 85435 Erding (DE); SCHIESSLING, Hubert, 84034 Landshut (DE); STEINMETZ, Alan, Lawrence, Louisville, KY 40205 (US); SCHALL, Norbert, 85659 Forstern (DE); DZIWOK, Klaus, 83395 Freilassing (DE); COUTELLE, Helmut, 85356 Freising (DE); SIMON, Wolfgang, 85375 Neufahrn (DE); DICK, Stefan, Albuquerque, NM 87111 (US)
(74) Vertreter: Westendorp, Michael, Dr.
(86) Internationale Anmeldenummer: PCT/EP2001/008941
(87) Internationale Veröffentlichungsnummer: WO 2002/012387

(56) Entgegenhaltungen:
- EP-B- 0 565 924
- DE-A- 19 710 619
- US-A- 5 914 373

## Beschreibung

Die Erfindung betrifft oberflächenmodifizierte aktive anorganische Füllstoffe, die mit amphiphilen Polymeren oder -Copolymeren modifiziert sind, sowie deren Verwendung in Polymeren, insbesondere PVC.

PVC kann durch eine Reihe von Zusatzstoffen stabilisiert werden (R. Gächter, H. Müller, Carl Hanser Verlag, 3. Auflage 1989, "Kunststoffadditive"). Neben herkömmlichen Additiven, wie epoxidierten Fettsäureestern, Zink-, Cadmium- Blei und/oder Alkali- und/oder Erdalkalicarboxylaten oder Aluminiumcarboxylaten, Phosphiten; Antioxidantien, ß-Dicarbonylverbindungen, Weichmachern, Gleitmitteln und Pigmenten werden Füllstoffe eingesetzt. Als Füllstoff können Hydroxide, Carbonate, Silicate, Dolomite und als Pigmente können z.B. Titandioxid und/oder Zirkonoxid verwendet werden. Weiterhin kann die Zusammensetzung mindestens eine zeolitische Verbindung und eine Schichtverbindung wie Hydrotalcit enthalten. Hydrotalcite sind in der EP-A- 0 772 648 als aktive Füllstoffe; mit stabilisierender Wirkung in PVC beschrieben.

Die deutsche Patentanmeldung 10038147.2 beschreibt amphiphile Propfpolymere oder Copolymere, die gleiche oder voneinander verschiedene Basis--oder Grundpolymerketten, gleiche oder voneinander verschiedene Zentraleinheiten auf der Basis eines Melamin-Formaldehyd- oder Harnstoff-Formaldehyd-Derivats sowie gleiche oder voneinander verschiedene polare oder unpolare Seitenketten enthalten. Diese Propfpolymere oder Copolymere können u.a. als Haftvermittler zwischen anorganischen oder organischen Pigment- und/oder Füllstoffoberflächen und organischen Polymermatrices verwendet werden. Über die Art der Pigmente oder Füllstoffe finden sich keine konkreten Angaben.

Es wurde gefunden, dass aktive Füllstoffe wie z.B. Hydrotalcit. für Polymermassen bei dem Vermahlen stark elektrostatisch aufgeladen werden und sich deshalb schlecht transportieren bzw. absacken lassen. Außerdem neigten diese Füllstoffe zum Verklumpen und setzten sich auf den Obeflächen der verwendeten Apparaturen und Leitungen fest, was häufig zu Verstopfungen führte. Es bestand daher die Aufgabe, diese Füllstoffe antistatisch auszurüsten. Gleichzeitig sollte das Autistatikum die stabilisierende Wirkung dieser Füllstoffe in Polymermassen, insbesondere in halogenhaltigen Polymermassen, wie Polyvinylchlorid, nicht negativ beeinflussen.

Aus den USA-A 5 627 232, 5 629 373 und 5 914 373 sind lineare Aminoplast-Ether-Copolymere, bekannt, die eine bifunktionelle Alcylenoxygruppe und einen Skelettrest eines Aminoplasten, wie Glycoluril enthalten.

Es wurde gefunden, dass sich amphiphile Aminoplast-Ether-Polymere besonders gut für die Oberflächenmodifikation von reaktiven, anorganischen Füllstoffen eignen.

Gegenstand der Erfindung sind oberflächenmodifizierte Füllstoffe, die dadurch gekennzeichnet sind, dass die Füllstoffe reaktive anorganische Füllstoffe darstellen und das Modifizierungsmittel ein amphiphiles Aminoplast-Ether-Polymer oder -Copolymer des Strukturtyps 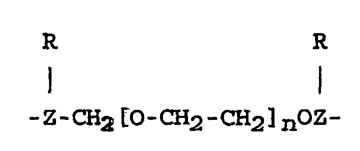 darstellt, worin bedeuten:
Z bedeutet gleiche oder voneinander verschiedene Aminoplast-Zentraleinheiten auf der Basis von Melamin-Formaldehyd- oder Harnstoff-Formaldehyd-Derivaten;
n = 10 bis 500;
R bedeutet die Gruppe -[O-CH₂-CH₂]ₘO-S
worin
m = 5 bis 500 und
S eine substituierte oder unsubstituierte Alkyl-, Aryl-, Alkaryl- oder Aralkylgruppe darstellt.

Der Begriff "Aminoplaste" ist der Oberbegriff für Melamin-Harnstoff-, Benzoguanin- und Carbamidesterharze. Harz bedeutet in diesem Zusammenhange, dass Melamin-, Harnstoff-, Bezöguanin- oder Carbamidmonomere mit Formaldehyd zum "Harz" polymerisiert wurden.

Unter reaktiven anorganischen Füllstoffen für Polymermassen versteht man anorganische Füllstoffe, die in irgendeiner Weise mit den Polymermassen oder deren Zersetzungsprodukten in Wechselwirkung treten. Mit Füllstoffen lassen sich spezifische mechanische und/oder physikalische Eigenschaften der Polymermatrix verändern. Da die aktive Funktion unterschiedlicher Natur sein kann, ist eine Definition nur in Verbindung mit dem jeweilig eingesetzten Polymer möglich. Derartige Füllstoffe sind beispielsweise Flammschutzmittel und verstärkende Füllstoffe. Ferner können diese Füllstoffe mit Substanzen reagieren, die bei der thermischen, chemischen oder strahleninduzierten Zersetzung der Polymermassen entstehen. Zu diesen Substanzen zählen z.B. Halogenwasserstoffe, die bei der Zersetzung von halogenhaltigen Polymermassen, wie Polyvinylchlorid (PVC) entstehen.

Die bevorzugt für halogenhaltige Polymere verwendeten reaktiven Füllstoffe sind Doppelschichthydroxide mit innerkristallinem Ladungsausgleich und können durch die folgende allgemeine Formel beschrieben werden:

[M ^{(II)} ₁₋ₓ M ^{(III)} x (OH) ₂] B · n H₂O

wobei M^{(II)} ein zweiwertiges Metallion, M^{(III)} ein dreiwertiges Metallion, B ein ein- oder mehrbasisches organisches oder anorganisches Anion und n = 0 - 10 bedeuten. Es gibt natürliche und synthetische Doppelschichthydroxide, wobei M^{(II)} ein zweiwertiges Ion, z.B. des Magnesiums, Zinks, Calciums, Eisens, Kobalts, Kupfers, Cadmiums, Nickels und/oder Mangans und M^{(III)} ein dreiwertiges Ion, z.B. des Aluminiums, Eisens, Bors, Mangans, Wismuts und/oder Cers ist.

Ein in der Natur vorkommendes Doppelschichthydroxid ist der Hydrotalcit, der sich vom Mineral Brucit ableitet und folgender Idealformel genügt:

[Mg₆ Al₂ (OH)₁₆] CO₃ · n H₂O

Im Hydrotalcit sind einige Magnesiumionen durch Aluminiumionen ersetzt, wodurch die Einzelschicht eine positive Ladung erhält. Diese wird durch Carbonat-Anionen ausgeglichen, die sich zusammen mit Kristallwasser in den Zwischenschichten befinden.

Die Doppelschichthydroxide können aber auch leicht synthetisch durch die Umsetzung von zwei- und dreiwertigen Metallsalzlösungen hergestellt werden, wobei auf die DE-A-198 36 580 hingewiesen wird.

Als Beispiel für reaktive Füllstoffe aus der Gruppe der Oxide, Hydroxide oder Carbonate der Erdalkalimetalle kommen beispielsweise Magnesiumoxid, -hydroxid oder -carbonat sowie Dolomit, Caldiumcarbonat (z.B. Kreide) in Frage. Hierfür können entweder die natürlichen Mineralien- oder aber auch synthetisch hergestellte Produkte verwendet werden. Besonders bevorzugt wird Calciumcarbonat verwendet, das beispielsweise bei der Zersetzung von Polyvinylchlorid mit dem gebildeten Chlorwasserstoff reagiert und auf diese Weise die Doppelfunktion eines HCl-Fängers und einer Verarbeitungshilfe erfüllt. Entsprechendes gilt für das Zinkcarbonat. Auch die entsprechenden Oxide und Hydroxide haben diese Doppelfunktion, da bei der Umsetzung dieser Substanzen mit Chlorwasserstoff Wasser frei wird, das die Verbrennung unterbricht.

Die Oberflächenmodifikation des aktiven Füllstoffs erfolgt vorzugsweise mit amphiphilen Aminoplast-Ether-Polymeren. Die Aminoplast-Zentraleinheit ist vorzugsweise von Monomeren der Formeln 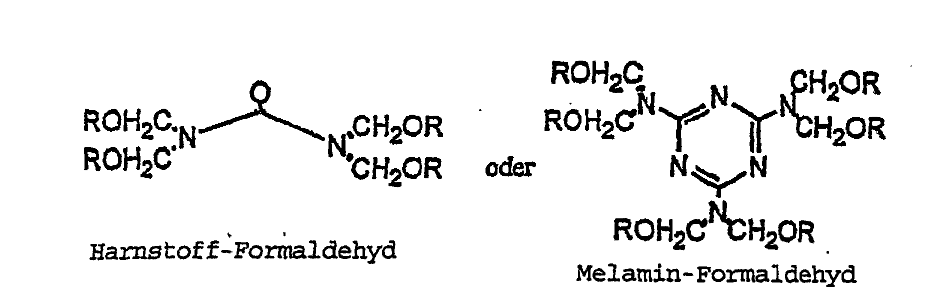 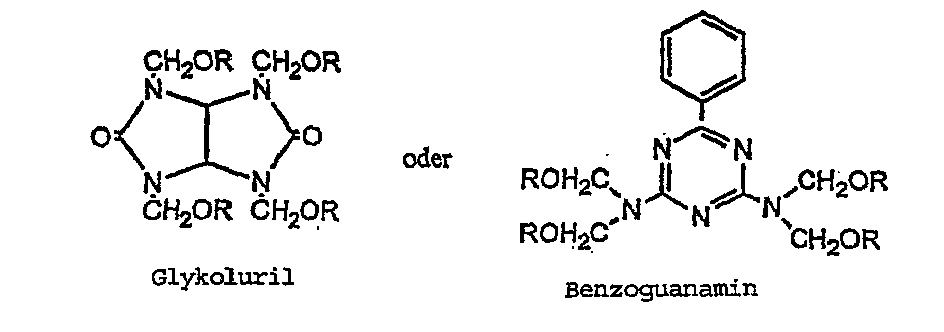 abgeleitet. Vorzugsweise stellt R eine niedere Aklylgruppe, insbesondere eine Methyl- oder Ethylgruppe dar. Vorzugsweise ist Z von Glycoluril abgeleitet.

Vorzugsweise beträgt das Molverhältnis zwischen den Aminoplast-Zentraleinheiten Z und dem Rest-[OCH₂-CH₂]ₙ-O- etwa 0,5 bis 2, insbesondere etwa 0,5 bis 1,7.

Vorzugsweise beträgt das Molverhältnis zwischen den Substituenten R und den Aminoplast-Zentraleinheiten Z etwa 0,5 bis 4, insbesondere etwa 0,5 bis 2.

Das amphiphile Polymer oder Copolymer liegt vorzugsweise in einer Menge von etwa 0,1 bis 5, insbesondere von etwa 0,1 bis 2 Gew.-% vor. Bei Mengen von mehr als etwa 5 Gew.-% können beim Einbau der oberflächenmodifizierten Füllstoffe in die Polymermassen Probleme auftreten. Ein zu hoher Anteil an amphiphilem Polymer in halogenhaltigen Polymermassen reduziert die thermische Stabilität des PVC.

Gegenstand der Erfindung ist ferner ein Verfahren zur Herstellung der vorstehend beschriebenen oberflächenmodifizierten anorganischen Füllstoffe, das dadurch gekennzeichnet ist, dass man
(a) eine Lösung oder eine Suspension des amphiphilen Polymers oder Copolymers mit einem reaktiven Füllstoff in Form eines trockenen Pulvers, einer feuchten Masse oder einer Suspension kontaktiert, das Lösungsmittel oder Dispergiermittel entfernt und das erhaltene Produkt gegebenenfalls mahlt; oder
(b) das amphiphile Polymer oder Copolymer in Form einer Schmelze mit dem reaktiven Füllstoff kontaktiert; oder
(c) das amphiphile Polymer oder Copolymer mit dem reaktiven Füllstoff trocken vermahlt.

Das erfindungsgemäße Verfahren wird vorzugsweise so durchgeführt, dass man (Variante a) das amphiphile Polymer oder Copolymer zunächst in einem organischen Co-Lösungsmittel aufquellen läßt; oder (Variable b) die Schmelze des amphiphilen Polymers oder Copolymers bei einer Temperatur zwischen der Schmelztemperatur und 200°C aufbringt; oder (Variante c) die Vermahlung bei einer Temperatur zwischen Raumtemperatur und 200°C durchführt.

Gegenstand der Erfindung ist ferner die Verwendung der vorstehend definierten oberflächenmodifizierten anorganischen aktiven Füllstoffe als Zusätze zu Polymermassen, insbesondere zu halogenhaltigen Polymermassen, wie Polyvinylchlorid.

Die oberflächenmodifizierten Füllstoffe können nach gängigen Methoden mit den Polymermassen zu einem Compound verarbeitet werden. Als Compoundieraggregat bieten sich dafür handelsübliche Mischaggregate an wie z.B. Ein- oder Doppelschneckenkneter, Ko-Kneter, Innenmischer oder ein Walzenstuhl (PVC) . Der Gehalt an oberflächenmodifizierten Füllstoffen kann in einer Menge von etwa 0,1 bis 70 Gew.-% in Abhängigkeit vom Füllstoff und der betreffenden Polymermatix zugesetzt werden. Hydrotalcite werden halogenhaltigen Polymeren in der Regel zwischen 0,1 bis maximal 15 Gew.-% zugesetzt.

Die Erfindung ist durch die nachstehenden Beispiele in nicht einschränkender Weise erläutert.

### Beispiel 1

Es wurde ein Hydrotalcit in der Carbonatform verwendet, der nach Beispiel 2 (a) der DE-A 198 36 580 hergestellt wurde.

100 g dieses Hydrotalcits wurden mit jeweils 0,5; 1,0 und 2,0 Gew.-% eines amphiphilen Copolymeren der vorstehend angegebenen allgemeinen Formel beschichtet, worin für Verbindung A Z = Glykoluril, n = 180, m = 16, S = Tristyrylaryl und für Verbindung B Z = Glykoluril, n = 180, m = 40, S = Arylakryl ist.

Die differentialcalorimetrischen Untersuchungen (DSC) ergaben, dass der Schmelzpunkt der beiden Modifizierungsmittel bei 49,5°C liegt. Die Zersetzung erfolgte bei Temperaturen von etwa 120 bis 180°C. Nach 3 h bei 180°C trat eine Braunfärbung auf.

Die Beschichtung des reaktiven Füllstoffs wurde wie folgt durchgeführt

### Varzante (a) .

10%-ige wäßrige Lösungen des organischen Modifizierungsmittels A bzw. B wurden auf 50 g feuchten Hydrotalcit-Filterkuchen (Wassergehalt, etwa 35 Gew.-%) aufgegeben, bei 150°C 2 bis 3 h im Trockenschrank getrocknet und vermahlen.

### Variante (b).

Die organischen Modifizierungsmittel A bzw. B wurden in stark zerkleinerter Form mit dem Hydrotalcit-Filterkuchen vor oder nach der Trocknung gemischt und gemahlen.

### Variante (c) .

Die organischen Modifizierungsmittel A bzw. B wurden aufgeschmolzen und mit dem Hydrotalcit vor oder nach der Trocknung gemischt und gemahlen. Die Viskosität der Modifizierungsmittel ist bei 60 bis 80°C so gering, dass es zugetropft werden kann.

### Variante (d) .

Hydrotalcit wird mit Wasser gemischt und die organischen Modifizierungsmittel A und B unter guter Durchmischung zugesetzt. Der erhaltene Slurry kann einer Trocknung z.B. mit Hilfe eine Sprühtrockners, zugeführt werden. Man kann den Slurry auch filtrieren und den Filterrückstand einer Trocknung, z.B. Bandtrocknung zuführen.

Zweckmäßig kann das erfindungsgemäße Verfahren in Verfahren zur Herstellung bzw. Aufbereitung von Füllstoffen integriert werden.

Die nach den Varianten (a) bis (d) modifizierten Hydrotalcite wurden in an sich bekannter Weise trocken in Weich-PVC-Pulvermischungen eingearbeitet. Das PVC-Pulver enthielt Stabilisatoren (Zinkstearat, Rhodiastab 50) und Weichmacher (Diisododecylphthalat).

Zum Vergleich wurden ein unmodifizierter Hydrotalcit der Fa. Kyowa und die mit Verbindung A und B modifizierten Hydrotalcite entsprechend Beispiel 2 (b) der DE-A- 198 36 580 in das Weich-PVC-Pulver eingearbeitet. Dazu wurde der Füllstoff mit dem Weich-PVC-Pulver gemischt und nach an sich bekannter Weise auf einem Mischwalzwerk bei 180°C oder im Kneter plastifiziert.

Die Ergebnisse sind in Tabelle I angegeben.

**Tabelle I**

| Eigenschaften von oberflächenmodifizierten Hydrotalciten | | | | | |
|---|---|---|---|---|---|
| | Standard "Alcamizer 1" (Fa. Kyowa) | HT und Verbindung B | | HT und Verbindung A | |
| | | 2 Gew.-% | 1 Gew.-% | 2 Gew.-% | 1 Gew.-% |
| VDE-Test | 141 min | - 6,0% | -2,8% | -4,3% | -2,8% |
| Mathisofen Verfärbung | nach 215 min | nach 195 min | nach 207 min | nach 190 min | nach 207 min |
| Rieselfähigkeit im Glas | - | sehr gut | gut | sehr gut | gut |

Die stabilisierende Wirkung von Additiven, insbesondere Hydrotalciten, wird in PVC in der Regel mit dem VDE-Test nach DIN 53 581 PVC A bzw. VDE 0472 § 614 und dem Mathisofen-Test überprüft. Bei dem VDE-Test wird die Zeit bestimmt, die durch Wärmeeinwirkung eine irreversible chemische Veränderung verursacht und durch die Ababe von HCl gekennzeichnet ist. Das abgespaltene HCl wird durch Farbtonumschlag eines Universalindikatorpapiers zum pH-Wert 3 erfasst. Beurteilt wird die prozentuale zeitliche Abweichung vom Standard.

Beim Mathisofen-Thermotest werden PVC-Proben einer unterschiedlich langen Wärmebelastung ausgesetzt, die durch den Vorschub eines Schlittens aus dem Ofen vorgegeben ist. Der Farbverlauf der Probestreifen dient als relativer Maßstab für die statische Temperaturbeständigkeit.

Die Ergebnisse von Tabelle I zeigen, dass mit Verbindung A bzw. B im erfindungsgemäßen Beispiel von 1 Gew.-% kein negativer Einfluss auf die Thermostabilität beobachtet werden konnte. Es zeigte sich, dass eine deutlich antistatische Ausrüstung des aktiven Füllstoffs mit Verbindung A und B gelingt, die die Rieselfähigkeit und folglich den Transport in Anlagen und das Absacken des Füllstoffs erheblich vereinfachen.

Der Einfluss des antistatisch ausgerüsteten aktiven Füllstoffs auf die elektrischen Eigenschaften im PVC-Walzfell wurden mit einer Ringelektrode untersucht. Die Messung der Leitfähigkeit der Oberfläche nach ASTM D257 ist ein Beurteilungskriterium für antistatische Additive. Die oberflächenleitfähigkeit zeigt, ob ein Material eine hohe oder eine geringe Leitfähigkeit besitzt, ist aber nicht zwangsläufig ein Maß für die elektrostatische Leistung.

In Tabelle II sind die Ergebnisse der Leitfähigkeitsmessungen an Weich-PVC-Walzfellen zusammengefasst.

Versuch Nr. 1 enthält den unmodifizierten Hydrotalcit Alcamizer 1 von der Fa. Kyowa, Versuch Nr. 2 enthält mit Verbindung A modifiziertes Hydrotalcit (2 Gew.-% Modifizierungsmittel bezogen auf HT).

**Tabelle II**

| | Widerstand / Ω bei 100 V; 23,9°C; RH 15% | spez. Widerstand bei 40 V; 23,7°C; RH 32,5% | spez. Widerstand bei 100 V; 23,9°C; RH 15% |
|---|---|---|---|
| Versuch 1 | 1,6*10⁹ | 1,78*10¹² | 6,3*10¹⁰ |
| Versuch 2 | 1,3*10⁹ | 1,98*10¹² | 6,6*10¹⁰ |

Die Größe der gemessenen Oberflächenwiderstände liegt im Bereich isolierender Materialien, d.h. der oberflächenmodifizierte Hydrotalcit hat in der eingesetzten Menge keinen Einfluss auf die elektrische Leitfähigkeit des PVC-Walzfells. Dies ist für die Anwendung der Weich-PVC-Mischung als Kabelummantelung (Isolator) positiv zu bewerten.

Es wurde ferner die Netzwirkung in wäßriger Phase untersucht. Dabei wird der nichtmodifizierte Hydrotalcit vom Wasser nicht benetzt und schwimmt auf der Wasseroberfläche auf. Die oberflächenmodifizierten Hydrotalcite A und B werden von Wasser sehr gut benetzt und lassen sich gut aufschlämmen. Diese Eigenschaft ist für das Einmischen in polare Medien wichtig.

### Beispiel 2

### Oberflächenmodifizierung von Calciumcarbonat

100 g Calciumcarbonat wurden mit jeweils 0,5 Gew.-%, 1,0 Gew.-%, 2,0 Gew:-% und 4,0 Gew.-% der Verbindung A und der Verbindung B beschichtet. Die Beschichtung erfolgte nach den varianten (a) bis (d).

### Beispiel 3

### Oberflächenmodifizierung von Magnesiumhydroxid

100 g Magnesiumhydroxid wurde mit jeweils 0,5 Gew.-%, 1,0 Gew.-%, 2,0 Gew.-% und 4,0 Gew.-% der Verbindung A und der Verbindung B beschichtet. Die Beschichtung erfolgte nach den Varianten (a) bis (d).

### Beispiel 4

### Oberflächenmodifierung von Hydromagnesit

100 g Hydromagnesit wurde mit jeweils 0,5 Gew.-%, 1,0 Gew.-%, 2,0 Gew.-% und 4,0 Gew.-% der Verbindung A und der Verbindung B beschichtet. Die Beschichtung erfolgte nach den Varianten (a) bis (d).

## Patentansprüche

1. Oberflächenmodifizierte Füllstoffe, **dadurch gekennzeichnet, dass** die Füllstoffe reaktive anorganische Füllstoffe darstellen und das Modifizierungsmittel ein amphiphiles Aminoplast-Ether-Polymer-oder -Copolymer des Strukturtyps 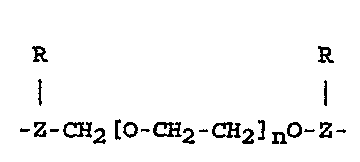 darstellt, worin bedeuten:
Z bedeutet gleiche oder voneinander verschiedene Aminoplast-Zentraleinheiten auf der Basis von Melamin-Formaldehyd- oder Harnstoff-Formaldehyd-Derivaten;
n = 10 bis 500;
R bedeutet die Gruppe -[0-CH₂-CH₂]ₘO-S
worin
m = 5 bis 500 und
S eine substituierte oder unsubstituierte Alkyl-, Aryl-, Alkaryl- oder Aralkylgruppe darstellt.

2. Oberflächenmodifizierte Füllstoffe nach Anspruch 1, **dadurch gekennzeichnet, dass** der reaktive Füllstoff ein Doppelschichthydroxid, wie Hydrotalcit, oder ein Oxid, Hydroxid oder Carbonat eines Erdalkalimetalls oder des Zinks darstellt.

3. Oberflächenmodifizierte Füllstoffe nach Anspruch 1 oder 2, **dadurch gekennzeichnet, dass** die Aminoplast-Zentraleinheit Z von Monomeren der Formeln 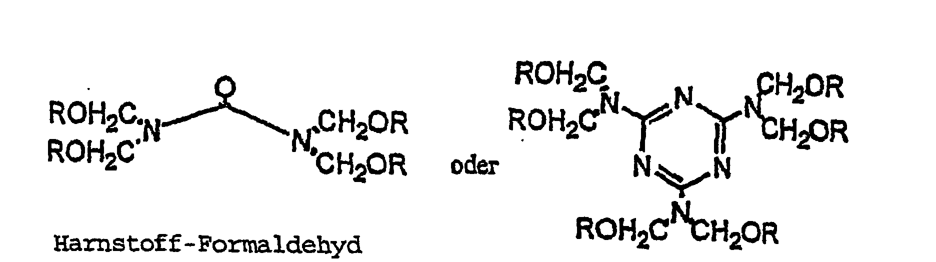 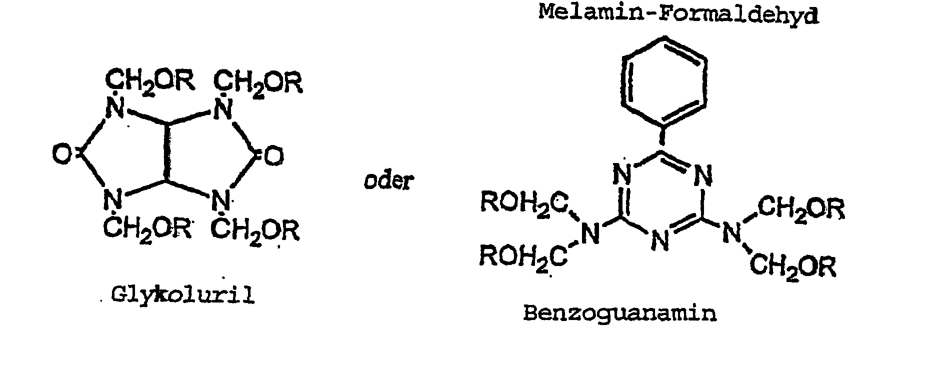 abgeleitet ist, worin R eine niedere Alkylgruppe, vorzugsweise eine Methyl- oder Ethylgruppe, darstellt.

4. Oberflächenmodifizierte Füllstoffe nach einem der Ansprüche 1 bis 3, **dadurch gekennzeichnet, dass** Z von Glykoluril abgeleitet ist und dass R eine Alkylgruppe mit 5 bis 15 Kohlenstoffatomen oder eine Alkarylgruppe mit 5 bis 15 Kohlenstoffatomen in der Alkylgruppe darstellt.

5. Oberflächenmodifizierte Füllstoffe nach einem der Ansprüche 1 bis 4, **dadurch gekennzeichnet, dass** das Molverhältnis zwischen Aminoplast-Zentraleinheit Z und dem Rest -[OCH₂-CH₂]-O- etwa 0,5 bis 2, vorzugsweise etwa 0,5 bis 1,7, beträgt.

6. Oberflächenmodifizierte Füllstoffe nach einem der Ansprüche 1 bis 5, **dadurch gekennzeichnet, dass** das Molverhältnis zwischen dem Substituenten R und der Aminoplast-Zentraleinheit Z etwa 0,5 bis 4, vorzugsweise etwa 0,5 bis 2, beträgt.

7. Oberflächenmodifizierte Füllstoffe nach einem der Ansprüche 1 bis 6, **dadurch gekennzeichnet, dass** das amphiphile Polymer oder Copolymer in einer Menge von etwa 0,1 bis 5, vorzugsweise von etwa 0,1 bis 2 Gew.-% vorliegt.

8. Verfahren zur Herstellung der oberflächenmodifizierten Füllstoffe nach einem der Ansprüche 1 bis 7, **dadurch gekennzeichnet, dass** man
(a) eine Lösung oder eine Suspension des amphiphilen Polymers oder Copolymers mit einem reaktiven Füllstoff in Form eines trockenen Pulvers, einer feuchten Masse oder einer Suspension kontaktiert, das Lösungsmittel oder Dispergiermittel entfernt und das erhaltene Produkt gegebenenfalls mahlt; oder
(b) das amphiphile Polymer oder Copolymer in Form einer Schmelze mit dem reaktiven Füllstoff kontaktiert; oder
(c) das amphiphile Polymer oder Copolymer mit dem reaktiven Füllstoff trocken vermahlt.

9. Verfahren nach Anspruch 8 (Variante a) , **dadurch gekennzeichnet dass** man das amphiphile Polymer oder Copolymer zunächst in einem Lösungsmittel aufquellen lässt.

10. Verfahren nach Anspruch 8 (Variante b), **dadurch gekennzeichnet, dass** man die Schmelze des amphiphilen Polymers oder Copolymers bei einer Temperatur zwischen der Schmelztemperatur und 200°C aufbringt.

11. Verfahren nach Anspruch 8 (Variante c), **dadurch gekennzeichnet, dass** man die Vermahlung bei einer Temperatur zwischen Raumtemperatur und 200°C durchführt.

12. Verwendung der oberflächenmodifizierten Füllstoffe nach einem der Ansprüche 1 bis 7 oder hergestellt nach einem der Ansprüche 8 bis 11, als Zusätze zu Polymermassen, insbesondere zu halogenhaltigen Polyermassen.

13. Verwendung nach Anspruch 12, **dadurch gekennzeichnet, dass** man die oberflächenmodifizierte Füllstoffe in einer Menge von etwa 0,1 bis 70 Gew.-% der Polymermasse zusetzt.

## Claims

1. Surface-modified fillers, **characterised in that** the fillers are reactive inorganic fillers and the modifying agent is an amphiphilic aminoplast-ether polymer or copolymer of the structural type 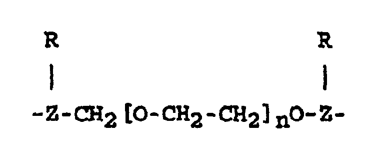 in which:
Z means identical or different aminoplast central units based on melamine-formaldehyde or ureaformaldehyde derivatives;
n = 10 to 500;
R means the group - [O-CH₂-CH₂]ₘO-S
in which
m = 5 to 500 and
S is a substituted or unsubstituted alkyl, aryl, alkaryl or aralkyl group.

2. Surface-modified fillers according to claim 1, **characterised in that** the reactive filler is a double layer hydroxide, such as hydrotalcite, or an oxide, hydroxide or carbonate of an alkaline earth metal or of zinc.

3. Surface-modified fillers according to claim 1 or claim 2, **characterised in that** the aminoplast central unit Z is derived from monomers of the formulae 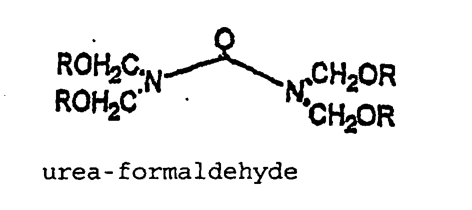 or 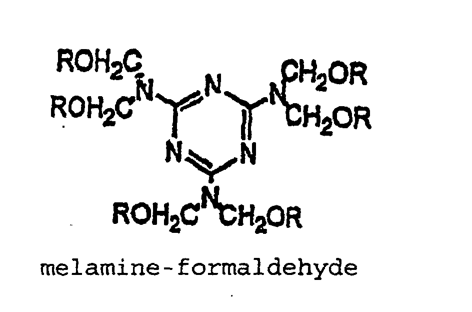 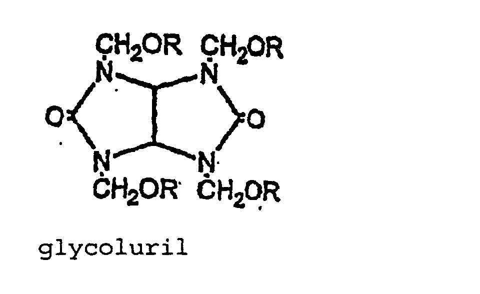 or 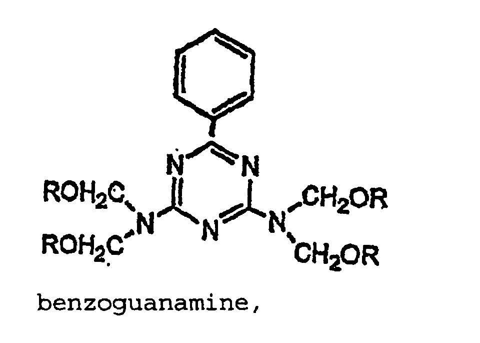 in which R is a lower alkyl group, preferably a methyl or ethyl group.

4. Surface-modified fillers according to any one of claims 1 to 3, **characterised in that** Z is derived from glycoluril and that R is an alkyl group with 5 to 15 carbon atoms or a alkaryl group with 5 to 15 carbon atoms in the alkyl group.

5. Surface-modified fillers according to any one of claims 1 to 4, **characterised in that** the molar ratio between the aminoplast central unit Z and the residue -[OCH₂-CH₂]-O- amounts to approx. 0.5 to 2, preferably approx. 0.5 to 1.7.

6. Surface-modified fillers according to any one of claims 1 to 5, **characterised in that** the molar ratio between the substituents R and the aminoplast central unit Z amounts to approx. 0.5 to 4, preferably approx. 0.5 to 2.

7. Surface-modified fillers according to any one of claims 1 to 6, **characterised in that** the amphiphilic polymer or copolymer is present in a quantity of approx. 0.1 to 5, preferably of approx. 0.1 to 2 wt.%.

8. A process for the production of the surface-modified fillers according to any one of claims 1 to 7, **characterised in that**
(a) a solution or a suspension of the amphiphilic polymers or copolymer is brought into contact with a reactive filler in the form of a dry powder, a moist mass or a suspension, the solvent or dispersant is removed and the resultant product is optionally ground; or
(b) the amphiphilic polymer or copolymer is brought into contact with the reactive filler in the form of a melt; or
(c) the amphiphilic polymer or copolymer is dry ground with the reactive filler.

9. A process according to claim 8 (variant a), **characterised in that** the amphiphilic polymer or copolymer is first caused to swell in a solvent.

10. A process according to claim 8 (variant b), **characterised in that** the melt of the amphiphilic polymer or copolymer is applied at a temperature between the melting temperature and 200°C.

11. A process according to claim 8 (variant c), **characterised in that** grinding is performed at a temperature between room temperature and 200°C.

12. Use of the surface-modified fillers according to any one of claims 1 to 7 or produced according to any one of claims 8 to 11, as additives to polymer compositions, in particular to polymer compositions containing halogen.

13. Use according to claim 12, **characterised in that** the surface-modified fillers are added in a quantity of approx. 0.1 to 70 wt.% of the polymer composition.

## Revendications

1. Charges à surface modifiée, **caractérisées en ce que** les charges sont des charges inorganiques réactives et l'agent modificateur est un polymère ou un copolymère aminoplaste-éther de type structurel 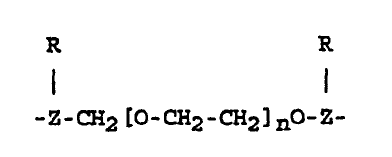 où
Z représente des motifs centraux aminoplaste identiques ou différents à base de dérivés de mélamine-formaldéhyde ou d'urée-formaldéhyde ;
n = 10 à 500
R représente le groupe -[O-CH₂-CH₂]ₘO-S
dans lequel
m = 5 à 500 et
S représente un groupe alkyle, aryle, alkaryle ou aralkyle substitué ou non substitué.

2. Charges à surface modifiée selon la revendication 1, **caractérisées en ce que** la charge réactive est un hydroxyde à deux couches tel que l'hydrotalcite, ou un oxyde, un hydroxyde ou un carbonate d'un métal alcalino-terreux ou du zinc.

3. Charges à surface modifiée selon la revendication 1 ou 2, **caractérisées en ce que** le motif central aminoplaste Z est dérivé de monomères de formules 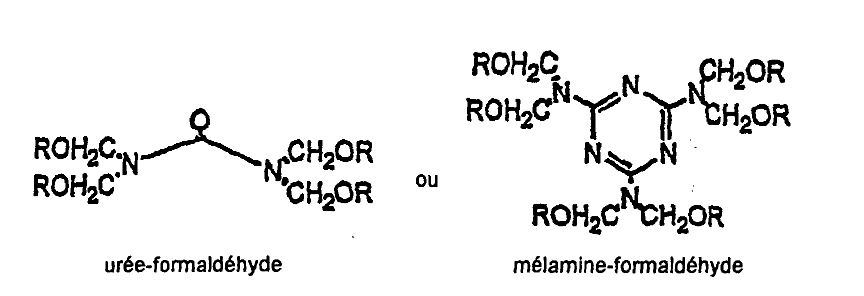 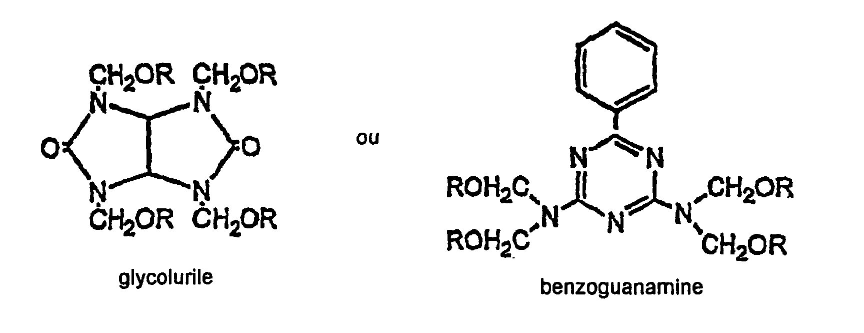 dans lesquelles R représente un groupe alkyle inférieur, de préférence un groupe méthyle ou éthyle.

4. Charges à surface modifiée selon l'une quelconque des revendications 1 à 3, **caractérisées en ce que** Z est dérivé du glycolurile et R représente un groupe alkyle contenant 5 à 15 atomes de carbone ou un groupe alkaryle contenant 5 à 15 atomes de carbone dans le groupe alkyle.

5. Charges à surface modifiée selon l'une quelconque des revendications 1 à 4, **caractérisées en ce que** le rapport molaire du motif central aminoplaste Z au reste -[OCH₂-CH₂]-O- est d'environ 0,5 à 2, de préférence d'environ 0,5 à 1,7.

6. Charges à surface modifiée selon l'une quelconque des revendications 1 à 5, **caractérisées en ce que** le rapport molaire du substituant R au motif central aminoplaste Z est d'environ 0,5 à 4, de préférence d'environ 0,5 à 2.

7. Charges à surface modifiée selon l'une quelconque des revendications 1 à 6, **caractérisées en ce que** le polymère ou le copolymère amphiphile est présent en une quantité d'environ 0,1 à 5% en poids, de préférence d'environ 0,1 à 2% en poids.

8. Procédé de préparation de charges à surface modifiée selon l'une quelconque des revendications 1 à 7, **caractérisé en ce que**
(a) on met en contact une solution ou une suspension du polymère ou du copolymère amphiphile avec une charge réactive sous forme d'une poudre sèche, d'une masse humide ou d'une suspension, on élimine le solvant ou le dispersant et on broie éventuellement le produit obtenu ; ou
(b) on met en contact le polymère ou le copolymère amphiphile sous forme d'une masse fondue avec la charge réactive ; ou
(c) on broie à sec le polymère ou le copolymère amphiphile avec la charge réactive.

9. Procédé selon la revendication 8 (variante a), **caractérisé en ce que** l'on fait d'abord gonfler le polymère ou le copolymère amphiphile dans un solvant.

10. Procédé selon la revendication 8 (variante b), **caractérisé en ce que** l'on porte la masse fondue du polymère ou du copolymère amphiphile à une température comprise entre la température de fusion et 200°C.

11. Procédé selon la revendication 8 (variante c), **caractérisé en ce que** l'on réalise le broyage à une température comprise entre la température ambiante et 200°C.

12. Utilisation des charges à surface modifiée selon l'une quelconque des revendications 1 à 7 ou préparées selon l'une quelconque des revendications 8 à 11 en tant qu'additifs pour des masses polymères, en particulier pour des masses polymères contenant des halogènes.

13. Utilisation selon la revendication 12, **caractérisée en ce que** l'on ajoute les charges à surface modifiée en une quantité d'environ 0,1 à 70% en poids de la masse polymère.
